# EUROPÄISCHE PATENTANMELDUNG

(11) **EP 1 256 302 A2**
(43) Veröffentlichungstag der Anmeldung: **13.11.2002**
(21) Anmeldenummer: 02009924.8
(22) Anmeldetag: 03.05.2002
(51) Int. Cl.: A47J 43/25

(54) **Schneidgerät**

(30) Priorität: 08.05.2001 DE 20107774 U
(71) Anmelder: Pfister, Matthias, 88326 Aulendorf (DE)
(72) Erfinder: Pfister, Matthias, 88326 Aulendorf (DE)
(74) Vertreter: Engelhardt, Guido

(57) **Zusammenfassung**

Bei einem Schneidgerät (S), bestehend aus einer Auflage (2) für zu schneidende Lebensmittel und mindestens einer mit der Auflage (2) verbundenen je nach gewünschtem Schneidergebnis geformten Schneide (3) sind zumindest eine dem Schnittgut zugewandte Kante (4) der Schneide (3) und/oder eine Kante (15) der Auflage (2) durch Verrunden (5), durch Anfasen (6) oder durch eine Kombination aus Verrunden und Anfasen (7) entschärft.

Durch diese Ausgestaltung wird es ermöglicht, weiche Lebensmittel, wie zum Beispiel gekochte Kartoffeln, schnell und ohne verbleibenden Rest zu schneiden und ohne daß sich dabei der Anwender an Händen oder Fingern verletzt.

## Beschreibung

Die Erfindung bezieht sich auf ein Schneidgerät nach dem Oberbegriff des Anspruchs 1.

Ähnliche Schneidgeräte sind in unterschiedlichen Bauformen als sogenannte Reiben oder Hobel für Obst, Gemüse, Käse und dgl. bekannt. Meist bestehen diese aus einer durch einen Rahmen eingefaßten, rechteckigen Auflage für ein Lebensmittel und je nach gefordertem Schneidergebnis individuell geformten Schneiden, welche schräg von der Auflage abstehen oder mit Abstand in einer etwa parallelen Ebene zur Auflage stehen. Die Schneiden sind häufig aus der Auflage ausgeformt oder als separate Anbauteile mit der Auflage direkt oder indirekt verbunden. In der Regel sind diese Schneidgeräte aus Edelstahlblech oder aus Kunststoff mit eingesetzten Edelstahlklingen gefertigt.

Nachteilig an den bekannten Schneidgeräten ist, daß deren Schneiden zumindest scharfkantig, häufig sogar bewußt extrem geschärft sind. Dies ist für das mühelose Schneiden von festen Lebensmitteln, wie zum Beispiel rohem Gemüse oder Hartkäse, zwar durchaus sinnvoll und erwünscht, jedoch besteht beim Schneiden von weichen Lebensmitteln, wie zum Beispiel gekochten Kartoffeln, eine große Verletzungsgefahr. Diese müssen nämlich möglichst formschlüssig mit den Handflächen und den Fingern umfaßt und nahe der Schneiden gehalten werden, damit sie bei der Bewegung über die Schneiden nicht auseinanderbrechen. Gekochte Kartoffeln lediglich in einem oberen Teilbereich zu halten ist hierfür nicht ausreichend. Durch die schneidennahe Haltung der Handflächen oder Finger kommt es häufig zu Kontakt mit den Schneiden und dementsprechenden Verletzungen. Weiter nachteilig ist, daß eine Kartoffel deshalb nicht vollständig geschnitten werden kann und ein Rest auf der Auflage verbleibt. Dieser kann dann nur mühsam abgenommen werden, da er durch die Kartoffelstärke an der Oberfläche der Auflage klebt.

Die große Verletzungsgefahr verhindert demnach, daß ein Anwender das weiche Lebensmittel schnell und restlos verarbeiten kann, da er die Schneidbewegung sehr vorsichtig ausführen und seine Fingerhaltung dem während der Zerteilung immer kleiner werdenden Lebensmittel ständig anpassen muß, um sich nicht zu verletzen.

Es ist somit Aufgabe der vorliegenden Erfindung, ein Schneidgerät der vorgenannten Art zu schaffen, das es durch seine besondere Ausgestaltung ermöglicht, weiche Lebensmittel schnell und ohne verbleibenden Rest zu schneiden bzw. zu zerteilen, ohne daß sich dabei der Anwender an Händen oder Fingern in die Haut schneidet, sich reißt oder zumindest die obere Hautschicht abschürft.

Diese Aufgabe wird durch ein Schneidgerät nach den kennzeichnenden Merkmalen des Anspruchs 1 gelöst. Vorteilhafte Ausgestaltungen ergeben sich aus den Unteransprüchen.

Erfindungsgemäß ist vorgesehen, daß die nach dem jeweils gefordertem Schneidergebnis geformten Schneiden des Schneidgeräts und/oder vorzugsweise auch die Kanten der Auflage entschärft bzw. stumpf sind, das heißt, das die dem Schnittgut zugewandten Kanten der Schneiden und/oder die Kanten der Auflage entweder gerundet oder ein- bis mehrfach angefaßt oder in Kombination angefaßt und verrundet sind. Hierbei ist die Materialstärke oder die Ausformung der Schneiden so gewählt, daß für weiche Lebensmittel eine ausreichende Schnittwirkung besteht. Durch die Entschärfung der Kanten der Schneiden und/oder der Auflage wird eine Verletzung beim Schneiden nahezu ausgeschlossen. Zudem läßt sich ein Schneidrest mit denn Fingern oder dem Handballen gefahrlos durch die Schneiden drücken, so daß das Lebensmittel vollständig verarbeitet werden kann.

Eine vorteilhafte Ausgestaltung ist, daß eine Verrundung der Schneiden und Kanten der Auflage wenigstens einen Radius von 0,05 Millimeter aufweist, um eine sichere Entschärfung zu erreichen.

Eine vorteilhafte Ausgestaltung ist es des weiteren daß die an den Schneiden und Kanten angebrachte Fasen wenigstens eine Breite von 0,05 Millimeter aufweisen, um eine sichere Entschärfung zu erreichen.

Eine weitere vorteilhafte Ausgestaltung besteht darin, daß die Materialstärken der Schneiden und/oder der Auflage wenigstens 0,50 mm betragen, um Verletzungen aufgrund zu geringer Materialstärke, trotz entschärfter Kanten, zu vermeiden.

Angebracht ist es ferner, die quer zur Schnittrichtung verlaufenden Schneiden in Schnittrichtung mindestens 20 Millimeter breit zu bemessen und diese konvex oder konkav zu krümmen und/oder mit einer oder mehreren Einprägungen zu versehen und/oder ein oder mehrfach abzukanten, um eine erhöhte Festigkeit der langen Schneidfläche gegen Durchbiegung zu erzielen.

Nach einer weiteren vorteilhaften Ausgestaltung ist vorgesehen, zwischen der Auflage und den einzelnen Schneiden ein oder mehrere in Schnittrichtung sich erstreckende vorzugsweise als Trennmesser ausgebildete Stege an der Auflage und/oder den Schneiden anzubringen oder in diese einzuformen. Dadurch wird das Lebensmittel nicht nur in flache Scheiben geschnitten, sondern gleichzeitig wird eine weitere Teilung der Scheiben in einer einzigen Schneidbewegung erreicht.

Wird eine quer zur Schneidrichtung verlaufende Schneide mindestens 80 Millimetern lang bemessen, können auch größere Lebensmittel geschnitten werden.

Eine andere vorteilhafte Ausgestaltung sieht vor, daß mindestens sieben quer zur Schnittrichtung verlaufende Schneiden oder mindestens sieben quer zur Schnittrichtung verlaufende Schneidenreihen aus nebeneinander liegenden Schneiden hintereinander in Schnittrichtung angeordnet sind, um die Anzahl der Schneidhübe zu verringern, welche für eine restlose Verarbeitung des Lebensmittels benötigt werden.

Aus hygienischen Gründen sollte das Schneidgerät vorzugsweise aus Edelstahl oder aus Kunststoff oder aus einer Kombination dieser Materialien bestehen und mit einer Anti-Haft-Oberfläche ausgerüstet ist, um das Festhaften der Lebensmittel zu vermeiden.

Im folgenden ist das gemäß der Erfindung ausgebildete Schneidgerät anhand der Zeichnungen im einzelnen beschrieben. Es zeigt:

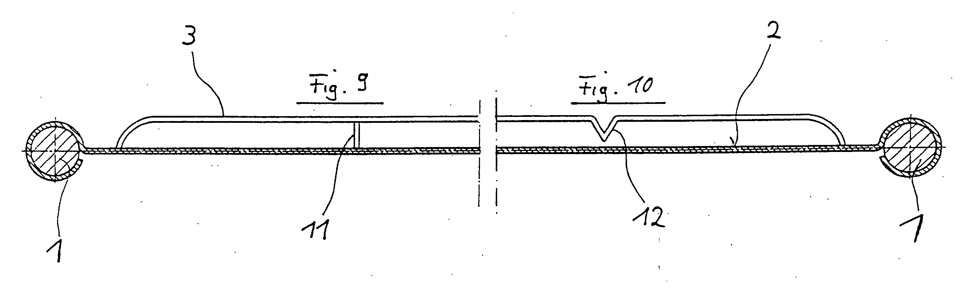

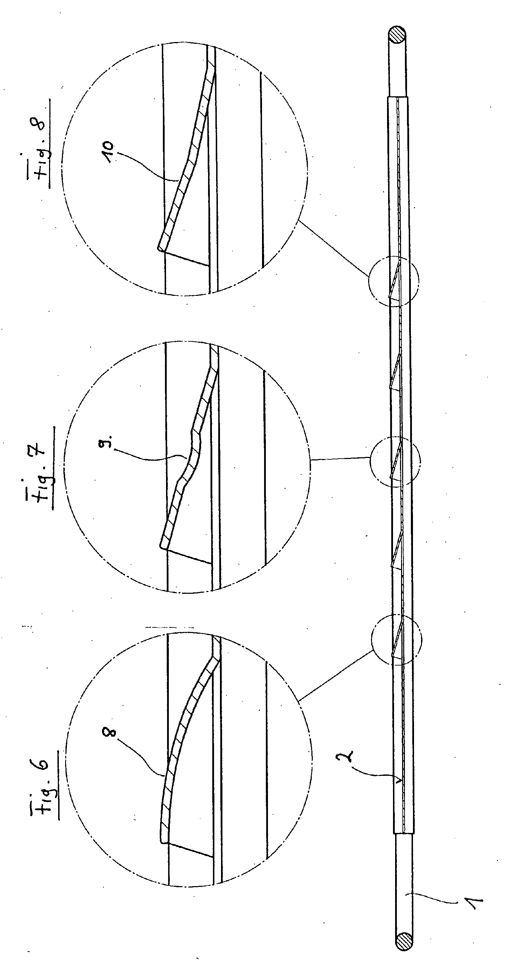

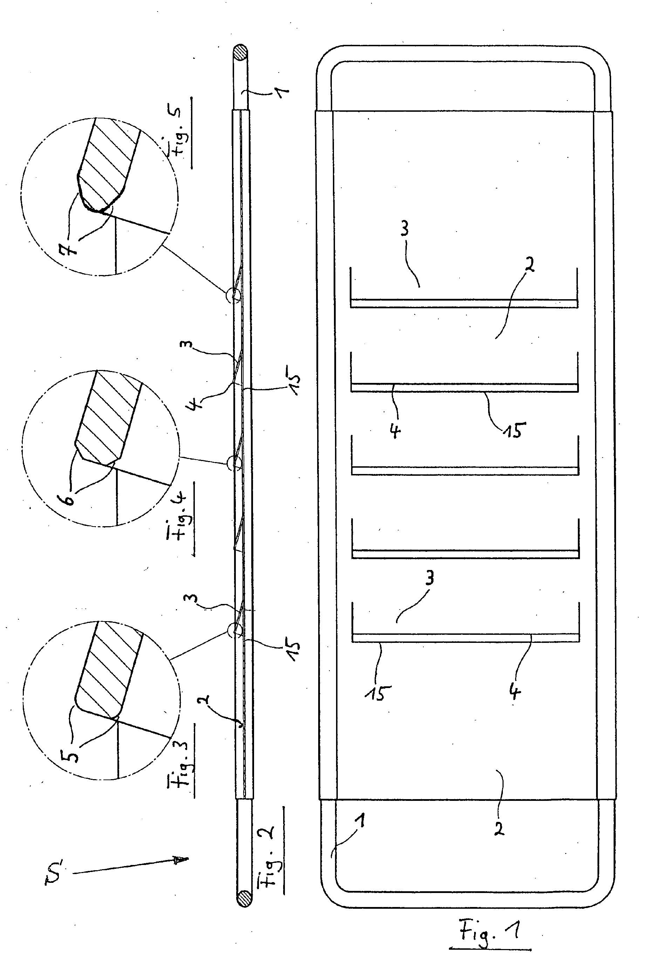

- Figur 1: ein Schneidgerät S, bestehend aus einem Rahmen 1 und einer Auflage 2 mit fünf breiten, quer zur Schnittrichtung verlaufenden und hintereinander angeordneten Schneiden 3,

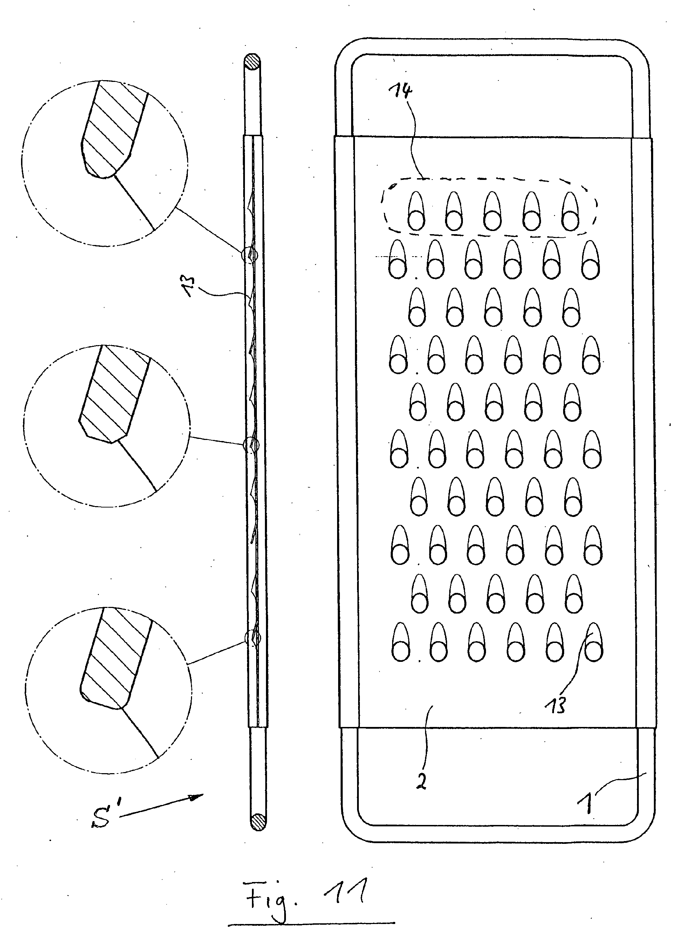

- Figur 2: eine Seitenansicht des Schneidgeräts S nach Fig.1, im Schnitt,
- Figur 3: einen Schnitt durch eine Schneide 3 des Schneidgerätes S mit leicht verrundeten Kanten 5,
- Figur 4: einen Schnitt durch eine Schneide 3 mit angefasten Kanten 6,
- Figur 5: einen Schnitt durch eine Schneide 3 mit angefasten und verrundeten Kanten 7,
- Figur 6: einen Schnitt durch eine Schneide mit gekrümmtem Profil 8,
- Figur 7: einen Schnitt durch eine Schneide mit Einprägung in ihrem Profil 9,
- Figur 8: einen Schnitt durch eine Schneide mit abgekantetem Profil 10 (Fig3 bis Fig8 in vergrößerten Darstellungen).
- Figur 9: Das Schneidgerät (S) in Vorderansicht und im Schnitt mit breiter Schneide 3 und einem senkrecht zwischen der Auflage 2 und der Schneide 3 stehendem Steg 11,

- Figur 10: das Schneidgerät (S) in Vorderansicht und im Schnitt, mit einer starker, zur Auflage 2 weisenden in der Schneide 3 eingeformten Kantung 12, und
- Figur 11: ein Schneidgerät S' in Draufsicht und geschnittener Seitenansicht mit zehn in Schnittrichtung hintereinander angeordneten Schneidenreihen 14 aus nebeneinander angeordneten kleinen Schneiden 13.

### Bezugszeichenliste:

- 1.: Rahmen
- 2.: Auflage
- 3.: Schneiden
- 4.: Schneidenkante
- 5.: gerundete Schneidenkante
- 6.: angefaste Schneidenkante
- 7.: angefaste und gerundete Schneidenkante
- 8.: gekrümmtes Schneidenprofil
- 9.: Schneidenprofil mit sickenartiger Einprägung
- 10.: abgekantetes Schneidenprofil
- 11.: entschärfter Steg
- 12.: starke Kantung
- 13.: kleine Schneiden
- 14.: Schneidenreihe
- 15.: Auflagekante

## Patentansprüche

1. Schneidgerät (S), bestehend aus einer Auflage (2) für zu schneidende Lebensmittel und wenigstens einer mit der Auflage (2) direkt oder indirekt verbundenen, je nach gewünschtem Schneidergebnis geformten Schneide (3, 13),
**dadurch gekennzeichnet,**
**daß** mindestens eine dem Schnittgut zugewandte Kante (4) der Schneide (3, 13) durch Verrunden (5), durch Anfasen (6) oder einer Kombination aus Verrunden und Anfasen (7) entschärft ist.

2. Schneidgerät nach Anspruch 1,
**dadurch gekennzeichnet,**
**daß** mindestens eine Kante (15) der Auflage (2) durch Verrunden (5), durch Anfasen (6) oder einer Kombination aus Verrunden und Anfasen (7) entschärft ist.

3. Schneidgerät nach Anspruch 1 oder 2,
**dadurch gekennzeichnet,**
**daß** sämtliche Kanten der Schneide (3, 13) und/oder der Auflage (2) entschärft sind.

4. Schneidgerät nach einem oder mehreren
der Ansprüche 1 bis 3,
**dadurch gekennzeichnet,**
**daß** die Verrundungen (5, 7) der Kanten der Schneide (3, 13) und/oder der Kanten der Auflage (2) mindestens einen Radius von 0,05 Millimeter aufweisten.

5. Schneidgerät nach einem oder mehreren
der Ansprüche 1 bis 3,
**dadurch gekennzeichnet,**
**daß** die an den Kanten der Schneide (3, 13) und/oder den Kanten der Auflage (2) angebrachten Fasen (6, 7) mindestens eine Breite von 0,05 Millimeter aufweisen.

6. Schneidgerät nach einem oder mehreren
der Ansprüche 1 bis 5,
**dadurch gekennzeichnet,**
**daß** die Materialstärken der Schneiden (3, 13) und/oder der Auflage (2) mindestens 0,50 Millimeter beträgt.

7. Schneidgerät nach einem oder mehreren
der Ansprüche 1 bis 6,
**dadurch gekennzeichnet,**
**daß** die quer zur Schnittrichtung verlaufenden Schneiden (3, 13) in Schnittrichtung mindestens 20 mm breit bemessen sind.

8. Schneidgerät nach Anspruch 7,
**dadurch gekennzeichnet,**
**daß** die quer zur Schnittrichtung verlaufenden Schneiden (3, 13) ein konvex oder konkav gekrümmtes Profil (8) aufweisen und/oder mit einer oder mehreren Einprägungen (9) versehen und/oder als ein- oder mehrfach abgekantetes Profil (10) ausgebildet sind.

9. Schneidgerät nach einem oder mehreren
der Ansprüche 1 bis 8,
**dadurch gekennzeichnet,**
**daß** zwischen der Auflage (2) und den einzelnen Schneiden (3, 13) ein oder mehrere in Schnittrichtung sich erstreckende vorzugsweise als Trennmesser ausgebildeter Stege (11) oder Einprägungen (12) an der Auflage (2) und/oder den Schneiden (3, 13) angebracht oder in diese eingeformt sind.

10. Schneidgerät nach einem oder mehreren
der Ansprüche 1 bis 11,
**dadurch gekennzeichnet,**
**daß** die quer zur Schnittrichtung verlaufenden Schneiden (3) mindestens 80 Millimeter lang bemessen sind.

11. Schneidgerät nach einem oder mehreren
der Ansprüche 1 bis 10,
**dadurch gekennzeichnet,**
**daß** mindestens sieben quer zur Schnittrichtung verlaufende Schneiden (3) oder mindesten sieben quer zur Schnittrichtung verlaufende Schneidenreihen (14) aus nebeneinander liegenden Schneiden (13) hintereinander in Schnittrichtung angeordnet sind.

12. Schneidgerät nach einem oder mehreren
der Ansprüche 1 bis 11,
**dadurch gekennzeichnet,**
**daß** das Schneidgerät (S) aus Metall, vorzugsweise aus Edelstahl und/oder aus Kunststoff oder aus einer Kombination aus Metall und Kunststoff gefertigt ist.

13. Schneidgerät nach einem oder mehreren
der Ansprüche 1 bis 12,
**dadurch gekennzeichnet,**
**daß** die Auflage (2) und/oder die Schneiden (3, 13) mit einer Anti-Haft-Oberfläche ausgerüstet sind.
